# EUROPEAN PATENT APPLICATION

(11) **EP 1 370 094 A1**
(43) Date of publication of application: **10.12.2003**
(21) Application number: 02011832.9
(22) Date of filing: 28.05.2002
(51) Int. Cl.: H04Q 7/22

(54) **Method for location tracking of subscribers in cellular mobile radio system**

(71) Applicant: Apollis interactive AG, 81829 München (DE)
(72) Inventor: Park, Anthony Sang-Bum, 80687 München (DE); Wilhelm, Marc, 83620 Feldkirchen-Westerham (DE); Köthner, Lars, 80796 München (DE)
(74) Representative: Grünecker, Kinkeldey, Stockmair & Schwanhäusser Anwaltssozietät

(57) **Abstract**

A method for continued location tracking of subscribers in a cellular mobile radio system, said system comprising the steps of defining a target cell within said cellular mobile radio system to which a particular subscriber is expected to move; locating said subscriber within said cellular mobile radio system by means of a paging request; and defining a polling strategy controlling the frequency according to which subsequent locating requests are made to ensure the tracking of the subscriber's movement towards said target cell, said polling strategy insuring a minimum number of locating requests in relation to a desired tracking accuracy, said polling strategy defining different frequencies according to which locating requests are made for different distances the subscriber is away from said target cell in that said frequency changes during the movement of the subscriber towards said target cell.

## Description

The present invention relates to a method for continued location tracking of subscribers in a cellular mobile radio system.

Modern cellular radio systems are capable of providing upon request information concerning the current location of each subscriber that is currently logged into the system.

The operator of a cellular mobile radio system usually provides a server that offers such information upon request to dedicated entities. To locate a particular subscriber, a request specifying the subscriber is sent to the server, which, in response to such a request, activates a paging action to determine the current position of the subscriber, which position may have changed since the last paging.

As a result, the up-to-date location of the subscriber's user is returned, e.g. his current cell or his position as X-Y coordinates.

Location-based services (LBS), which may described as applications which react according to a geographic trigger have been proposed for different purposes. An LBS may provide dedicated information to a particular subscriber upon recognizing that the subscriber enters a predefined area. For example, an SMS (Short Message Service) Message may be sent to a subscriber that enters a certain exhibition hall in order to welcome the subscriber's user and to guide him to a particular booth within said exhibition hall.

In order to be able to timely send such messages to the intended user, it is crucial to know in advance, where the user is located and when he may be expected to enter the critical region which might be referred to as target region.

The problem that exists is that cellular mobile radio systems do not provide a trigger mechanism that would allow an LBS to recognize the entry of the subscriber to a particular geographic area.

Due to the non-existence of such trigger mechanism, it is mandatory to permanently track the location of a particular user's subscriber, such permanent tracking causing a large number or requests to the operator's server providing the location information. This results in high paging traffic and high costs to obtain the necessary information.

It is the object of the present invention to provide a method that considerably reduces the number of requests to keep the overall load of the server for tracking as low as possible.

This object is solved by a method for continued location tracking of subscribers in a cellular mobile radio system, said system comprising the steps of defining a target cell within said cellular mobile radio system to which a particular subscriber is expected to move; locating said subscriber within said cellular mobile radio system by means of a paging request; and defining a polling strategy controlling the frequency according to which subsequent locating requests are made to ensure the tracking of the subscriber's movement towards said target cell, said polling strategy insuring a minimum number of locating requests in relation to a desired tracking accuracy, said polling strategy defining different frequencies according to which locating requests are made for different distances the subscriber is away from said target cell in that said frequency changes during the movement of the subscriber towards said target cell.

Preferred embodiments of the present invention are the subject matters of the dependent claims.

Preferred embodiment and advantages of the present invention will be described in the following in relation to the accompanying drawings, which show:
- Figure 1: A map of the geographical area of Germany, illustrating the location of a subscriber in relation to a hotspot or target cells;
- Figure 2: a diagram illustrating the relation between the subscriber's distance to the target cell and the current polling interval;
- Figure 3: a map of the geographical area of Germany illustrating the locating of several hotspots; and
- Figure 4: a map of the geographical area of Germany illustrating the definition of concentric airport areas to further improve accuracy of the estimated time a subscriber needs to reach a target cell.

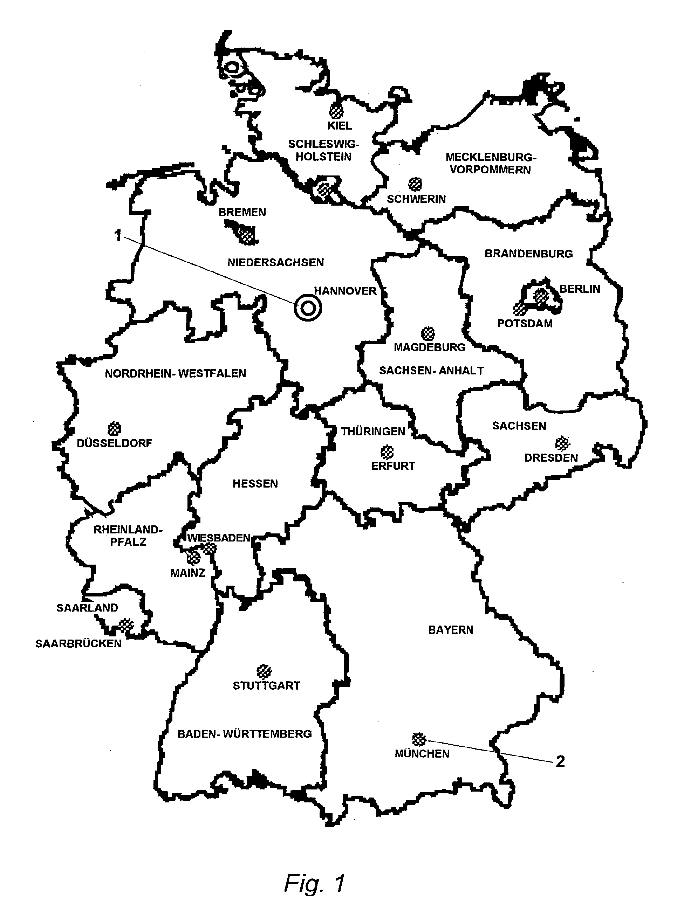

Figure 1 shows a map of the geographical area of Germany. It is assumed that this area is covered by at least one cellular mobile radio system comprising several hundreds or even thousands of base stations, each base station defining at least one cell of the system and serving the subscribers located in the respective cell. Figure 1 illustrates by way of example an area 1, which area may match the coverage area of a single cell or which alternatively may comprise the area of several adjacent cells. Area 1, which is located around the town Hanover is referred to in the following as "hotspot", i.e. an area which serves as a geographic trigger for an LBS. In other words, it is desired that upon entering or approaching of a subscriber into or to said hotspot 1, a pre-defined action occurs, for example, the sending of a message to that subscriber. This message is preferably an SMS message that may welcome the subscriber's user to a fair or may guide him to a certain location. As mentioned above, from a system architecture view, hotspot 1 may comprise a cluster of adjacent cells of the radio mobile system or may consist of a single cell. In any case, the entry of a particular subscriber into the hotspot is detected through the entry of the subscriber into a particular cell. Therefore, regardless of whether or not hotspot 1 comprises one or several cells of the radio mobile system, the area comprises at least one target cell, the entry of which by a subscriber triggers an LBS.

In regard to figure 1, it is assumed that visitors of a fair taking place in Hanover should be welcomed by means of an SMS once they enter hotspot area 1. Visitors may come from any location within or outside of Germany. By way of example, it is assumed that a visitor from Munich 2 is a registered visitor of the fair in Hanover and that by means of an LBS, the organization of the fair or an exhibitor of the fair wishes to welcome the visitor coming from Munich.

In order to be in the position to drop the intended message at the appropriate time to the visitor coming from Munich, it is necessary to track his movement towards the fair. It is possible that the visitor travels to the fair one day or several days before the fair is open. It is also possible that the visitor does not arrive at the very first of the fair, but for example, arrives during the second day. In order to cope with these situations, it is necessary to obtain location information on the particular subscriber over a considerable long time. As it is uncertain at which time exactly the visitor will arrive, it is further important to track the subscriber's current position in regular intervals, i.e. every three hours. While tracking a user coming from Munich every three hours may still allow to be prepared to send him the message at the appropriate time, such a time interval is not appropriate for a visitor coming from a more adjacent town because the overall travel time of this visitor towards Hanover might be less than three hours. To cope with this situation, it might be preferred to track every possible visitor every 30 minutes. Considering that major fairs may have thousands or ten thousands of visitors, this constitutes a considerable load for the system. The location of a subscriber may be tracked by means of a paging request. Preferably paging is made via those base stations that are controlled by the BSC at which the subscriber is currently registered. Generating such paging request for every possible visitor every several minutes leads to considerable traffic and consequently to considerable costs for running a particular LBS.

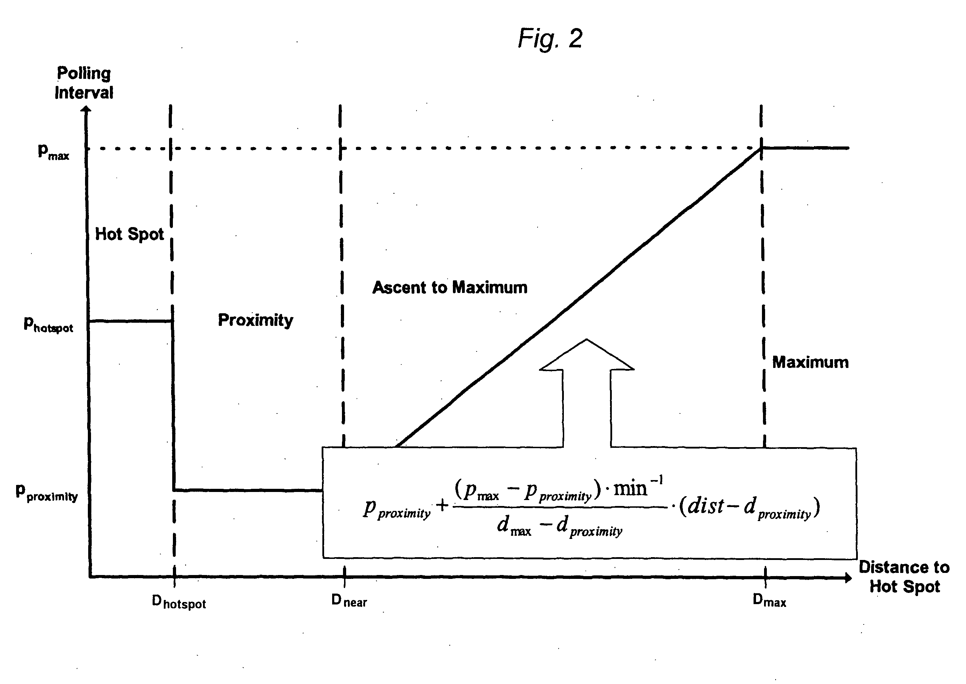

In accordance with the principles of the present invention and as explained by way of example in accordance with figure 2, the present invention suggests that the frequency according to which locating requests are made varies depending on the current location of subscribers. Preferably, the polling strategy according to which such locating requests are made foresees a higher polling frequency once the subscriber comes closer to the hotspot or target cell. As illustrated in figure 2, if a particular subscriber is away from the hotspot greater than a distance Dₘₐₓ, the polling frequency may be low, i.e. the polling intervals may be large. A visitor coming from Munich would need at least 6 hours travel time to come to Hanover by car or train. As long as it is determined that the visitors still in the region of Munich, it might be sufficient to track him in intervals of three hours. When traveling in the direction of the hotspot, the polling strategy foresees that the polling frequency increases i. e. that the polling intervals become smaller.

Preferably, this relation might be defined by a linear function as illustrated by figure 2. Once the subscriber comes into proximity of the hotspot (Dₙₑₐᵣ), the polling frequency might become maximum. For example if the subscriber is some kilometers before the hotspot or before the area of a fair, the polling intervals may be only several minutes long. In other words, during the most critical part of the tracking, i.e. before the message is to be sent, the polling frequency is maximum and may be constant during that time. Once the subscriber has entered the hotspot, for example, the area of the fair, the polling intervals may become longer again, as it is likely that the visitor will stay in that area for a while. This is illustrated in figure 2 by means of a step function.

As mentioned above, in accordance with the principles of the present invention, the overall load for locating several subscribers is considerably reduced due to an intelligent polling strategy that takes into account the current location of the involved subscribers.

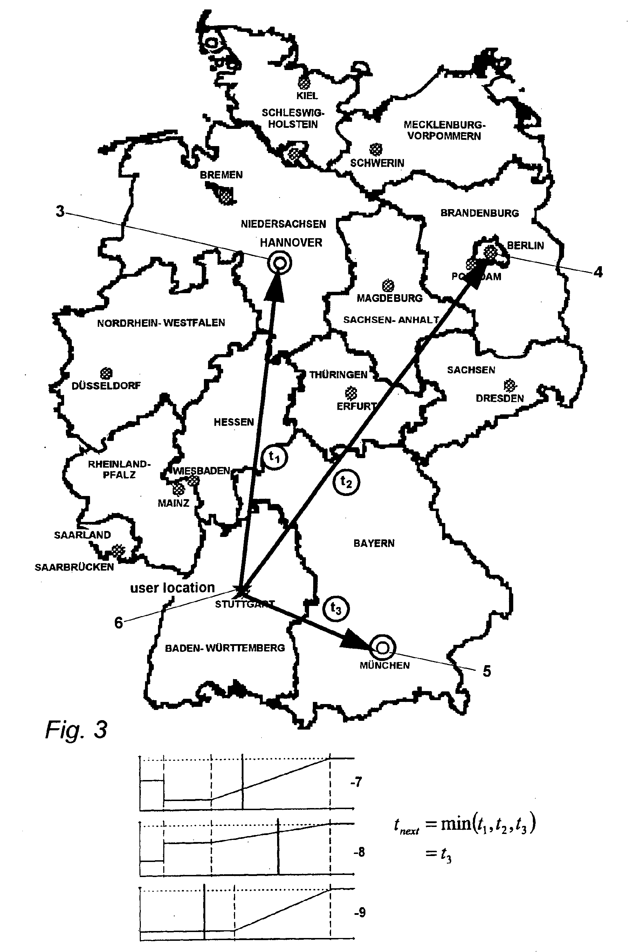

Figure 3 illustrates a scenario, where several hotspots 3, 4 and 5 are defined for a particular subscriber 6 currently located in the area of Stuttgart. In relation to each hotspot 3, 4 and 5, polling strategies in accordance with the principles of the current invention are defined. This is illustrated by way of example in figure 3 by the graphs 7, 8 and 9, respectively. The system is not in a position to predict to which of hotspots 3, 4 and 5 visitor 6 will actually move next. For each possible movement indicated by the three arrows, the system might estimate the time of arrival and may rely on the respective polling strategies 7, 8 and 9.

In accordance with the principles of the present invention, it is not necessary to track subscriber 6 in relation to possible target hotspot 3 and to further track him in relation to possible target hotspot 4 and also to track him in relation to target hotspot 6. It is sufficient to track him in accordance with the polling strategy that currently defines the highest polling frequency which will then automatically also satisfy the other two polling strategies that currently demand lower polling frequencies. In other words, the system foresees a mechanism that selects at any given time that polling strategy out of several polling strategy that currently demands the highest polling frequency, i.e. the shortest polling intervals.

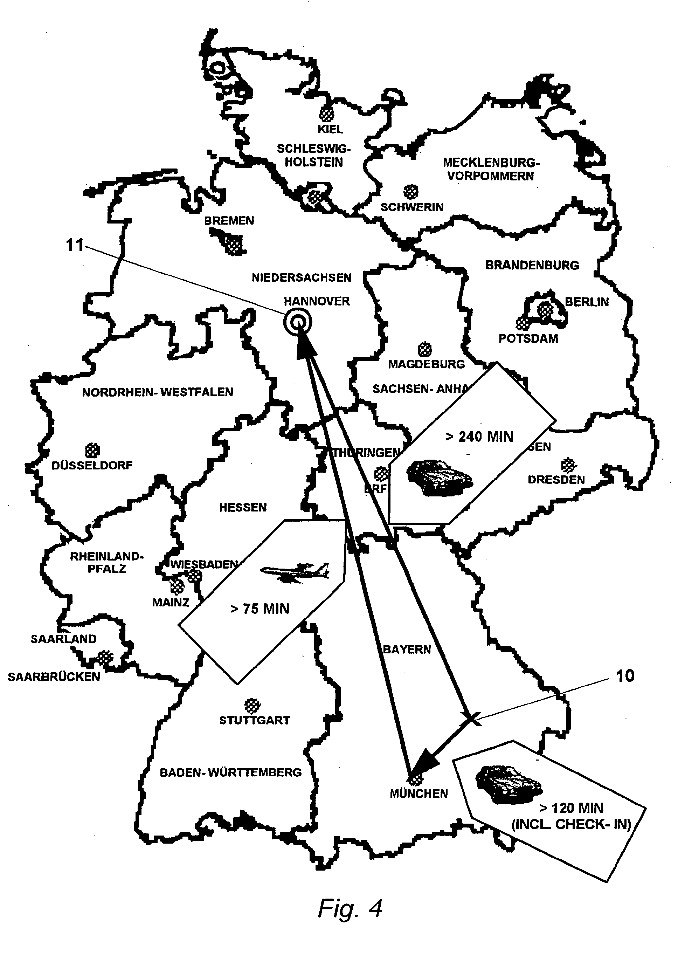

Figure 4 illustrates another scenario in which it is assumed that a visitor 10 has several options to travel to hotspot 11, namely either by car or by plane. If visitor 10 travels by car, it is assumed that his minimum travel time is 240 minutes. If subscriber 10 would travel by plane, his entry time is at least 75 minutes. To reach the airport from his current location and to check in, it is assumed that user 10 would need at least 120 additional minutes.

This means that a user deciding to travel by plane would reach hotspot 11 earlier than a user deciding to go by car. On the other hand, illustrated user 10 moving towards the airport appears to the system to travel away from hotspot area 11, meaning that the system could assume that lower polling frequencies are sufficient despite the fact that this user will reach hotspot area 11 earlier than by car. To cope with these situations, it is suggested to define airport areas which preferably have concentric shapes. If the system detects movement of subscriber 10 towards an airport area, the system may calculate a better estimate for the real travel time, taking into account the fact that traveling by plane is much faster than by car. To calculate a good estimate of the real travel time, a system may take into account information on scheduled flights. In summary, the system will thus be able to be aware of the arrival time of the particular subscriber at the hotspot despite the fact that the subscriber may be turned off during air time and may enter the hotspot shortly after landing.

Preferably, the system further foresees time shots for the tracking, meaning that tracking is avoided during other times, for example, during the night, in order to further reduce the tracking load.

In accordance with another preferred embodiment, the subscriber is speed may be calculated from his two last positions and the time interval lapsed in between the arrival of these two positions. Calculating the speed of the subscriber may further help to calculate a good estimate of the arrival time.

The polling strategy suggested by the present invention leads to an equally (randomly) polling request distribution, whereas fixed time intervals would lead to synchronous requests that could not be answered in total by a server if the amount of subscribes exceeds a certain level.

## Claims

1. A method for continued location tracking of subscribers in a cellular mobile radio system, said system comprising the steps of:
defining a target cell within said cellular mobile radio system to which a particular subscriber is expected to move;
locating said subscriber within said cellular mobile radio system by means of a paging request;
defining a polling strategy controlling the frequency according to which subsequent locating requests are made to ensure the tracking of the subscriber's movement towards said target cell, said polling strategy insuring a minimum number of locating requests in relation to a desired tracking accuracy, said polling strategy defining different frequencies according to which locating requests are made for different distances the subscriber is away from said target cell in that said frequency changes during the movement of the subscriber towards said target cell.

2. Method according to claim 1, wherein said frequency, according to which locating requests are made, steadily increases when the subscriber moves closer to the target cell.

3. Method according to claim 1 or 2, wherein said frequency, according to which locating requests are made, is constant if the distance between the target cell and the subscriber is greater than a distance Dₘₐₓ

4. Method according to one of the previous claims, wherein the frequency, according to which locating requests are made, is constant if the distance between the subscriber and the target cell is smaller than a distance Dₘᵢₙ.

5. Method according to claim 5, wherein the relation between the distance of the subscriber from the target cell and the frequency according to which locating requests are made follows a linear function at least for distances in between a minimum distance Dₘᵢₙ and a maximum Dₘₐₓ.

6. Method according to one of the preceding claims, wherein said frequency, according to which locating requests are made is constant when said subscriber is within said target cell, said constant frequency being smaller than the frequency that is used when the subscriber is in proximity to the target cell.

7. Method according to one of the previous claims, wherein the locating request is made by means of paging the subscriber via base stations which are close to the area where the subscriber is currently registerd.

8. Method according to one of the previous claims, wherein a plurality of target cells are defined for said subscriber, said polling strategy being defined for each of said several target cells and wherein the frequencies for making locating requests that are defined by said several polling strategies for a current location of the subscriber are compared to each other in order to select the current highest frequency as the dominant frequency, according to which locating requests are made.

9. Method according to one of the previous claims, wherein at least for one airport within the area of said cellular mobile radio system, a substantially concentric airport area is defined, wherein entry of the airport area by said subscriber is interpreted as the subscriber user's intention to travel by plane to the target cell and wherein the estimated travel time for the air route is considered for the polling strategy.

10. Method according to claim 9, wherein said polling strategy takes into account both the time that the subscriber needs to reach the airport and the travel time that the subscriber needs to travel from the airport towards the target cell in order to ensure a sufficient high frequency for making locating requests at the time the subscriber reaches an airport near that target cell.

11. Method according to claim 12, wherein the time that the user needs to reach the airport and the time to reach by plane an airport near the target cell is compared to the time the user or the subscriber would need to travel by car or train in that the minimum time to arrive at the target cell is taken into account for the polling strategy.

12. Method according to claim 9, 10 or 11 wherein the information on scheduled flights is used to further predict the minimum travel time to the target cell.

13. Method according to one of the previous claims, wherein the method is applied to several subscribers and wherein the user and distance dependent tracking causes the locating requests made in the system to be equally distributed.

14. Method according to one of the previous claims, wherein tracking of a subscriber is interrupted during predefined time intervals.

15. Method according to one of the preceding claims, wherein the subscriber's speed is calculated on the basis of two positions and the time interval in between in order to calculate the estimated arrival time of the subscriber at the target cell on the basis of the calculated speed.

16. Method according to one f the previous claims, wherein a message is sent to the subscriber upon detection of his entering into the target cell.

17. Method according to claim16, wherein said message is an SMS (Short Message Service) message.
